(19) Europäisches Patentamt / European Patent Office / Office européen des brevets

(11) **EP 4 209 929 A1**

(12) **EUROPEAN PATENT APPLICATION**

(43) Date of publication:
**12.07.2023 Bulletin 2023/28**

(21) Application number: **22208819.7**

(22) Date of filing: **22.11.2022**

(51) International Patent Classification (IPC):
**G06F 16/78** (2019.01)    **G06F 16/71** (2019.01)

(52) Cooperative Patent Classification (CPC):
**G06F 16/78; G06F 16/71**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2022 CN 202210023596**

(71) Applicant: **BEIJING BAIDU NETCOM SCIENCE TECHNOLOGY CO., LTD.**
**Beijing (CN)**

(72) Inventors:
• **WEI, Chengdong**
  **Beijing (CN)**
• **DING, Jiechao**
  **Beijing (CN)**
• **GAO, Rui**
  **Beijing (CN)**

(74) Representative: **Bittner, Bernhard**
**Hannke Bittner & Partner**
**Patent- und Rechtsanwälte mbB**
**Prüfeninger Strasse 1**
**93049 Regensburg (DE)**

(54) **VIDEO TITLE GENERATION METHOD AND APPARATUS, ELECTRONIC DEVICE AND STORAGE MEDIUM**

(57) Provided are a video title generation method and apparatus, an electronic device and a storage medium. The present disclosure relates to a technical field of video, and in particular to a technical field of short video. The method includes: obtaining (S110) a plurality of pieces of optional text information, for a first video file; determining (S120) central text information, from the plurality of pieces of optional text information, the central text information being optional text information with the highest similarity to content of the first video file; and determining (S130) the central text information as a title of the first video file. The present disclosure may determine an interest point in an original video file according to user's interactive behavior data on the original video file, and clip the original video file based on the interest point to obtain a plurality of clipped video files, namely, short videos.

FIG. 1

**Description**

TECHNICAL FIELD

The present disclosure relates to a technical field of video, and in particular, to a technical field of short video. Particularly, the present disclosure relates to a video title generation method and apparatus, an electronic device and a storage medium.

BACKGROUND

With the development of video technology and the popularity of short video platforms, a large amount of information is transmitted through video or short video. How to determine the title of a video or short video file has become a technical problem to be solved.

SUMMARY

The present disclosure provides a video title generation method and apparatus, an electronic device and a storage medium.

According to one aspect of the present disclosure, provided is a video title generation method, including: obtaining a plurality of pieces of optional text information, for a first video file; determining central text information, from the plurality of pieces of optional text information, the central text information being optional text information with the highest similarity to content of the first video file; and determining the central text information as a title of the first video file.

According to another aspect of the present disclosure, provided is a video title generation apparatus including: an obtaining module configured to obtain a plurality of pieces of optional text information, for a first video file; a determination module configured to determine central text information, from the plurality of pieces of optional text information, the central text information being optional text information with the highest similarity to content of the first video file; and a title module configured to determine the central text information as a title of the first video file.

According to another aspect of the present disclosure, provided is an electronic device including: at least one processor; and a memory connected in communication with the at least one processor. The memory stores an instruction executable by the at least one processor, and the instruction, when executed by the at least one processor, enables the at least one processor to execute any one of the methods provided by the above aspects.

According to another aspect of the present disclosure, provided is a non-transitory computer-readable storage medium storing a computer instruction thereon. The computer instruction is used to enable a computer to execute any one of the methods provided by the above aspects.

According to another aspect of the present disclosure, provided is a computer program product including a computer program, where the computer program implements any one of the methods provided by the above aspects, when executed by a processor.

By adopting the present disclosure, interest points in an original video file according to user's interactive behavior data on the original video file can be determined, the original video file is clipped based on the interest points to obtain a plurality of clipped video files, that is, short videos. Because the clipped short video contains the most interesting part of the original video file, the quality of the short video obtained by this method is relatively high, particularly in line with the user's preferences, and has great application value.

It should be understood that the content described in this part is not intended to identify crucial or important features of embodiments of the present disclosure, or to limit the scope of the present disclosure. Other features of the present disclosure will be easily understood from the following description.

BRIEF DESCRIPTION OF THE DRAWINGS

The accompanying drawings are used to better understand the present solution, and do not constitute a limitation to the present disclosure.

FIG. 1 is a schematic flowchart of a video title generation method according to the embodiments of the present disclosure.
FIG. 2 is a flow block diagram of a video title generation solution according to the embodiments of the present disclosure.
FIG. 3 is an application scene schematic diagram of a video title generation solution according to the embodiments of the present disclosure.
FIG. 4 is a flowchart of a video title generation method according to the embodiments of the present disclosure.
FIG. 5 is a schematic diagram of determining a central vector in a text vector corresponding to a bullet comment according to the embodiments of the present disclosure.
FIG. 6 is a structural schematic diagram of a video title generation apparatus according to the embodiments of the present disclosure.
FIG. 7 is a structural schematic diagram of a video title generation apparatus according to the embodiments of the present disclosure.
FIG. 8 is a structural schematic diagram of a video title generation apparatus according to the embodiments of the present disclosure.
FIG. 9 is a block diagram of an electronic device for implementing a video title generation method according to the embodiments of the present disclosure.

DETAILED DESCRIPTION

Exemplary embodiments of the present disclosure are described below with reference to the accompanying drawings, in which various details of the embodiments of the present disclosure are included to facilitate understanding, and should be considered as merely exemplary. Therefore, those of ordinary skill in the art should realize that various changes and modifications may be made to the embodiments described herein without departing from the scope of the present disclosure. Likewise, for clarity and conciseness, descriptions of well-known functions and structures are omitted in the following description.

Implementations of the present disclosure provide a video title generation method which may be used to generate a title for a video file or a title for a short video. Short video is a popular form of video in recent years. There is no uniform definition for the term "short video" in the art. Short videos are generally relative to long videos, and short videos and long videos are mainly divided from an aspect of the length of the video. For example, a video file with a length of tens of seconds, minutes or the like may be referred to as a short video, and a video file with a length of tens of minutes, hours or the like may be referred to as a long video (or a video in the traditional sense).

Generally, short-duration videos may be considered short videos, regardless of the shooting equipment, location and post-processing. For example, a video with a concentrated climax and duration of no more than 10 minutes may be considered a short video. From the perspective of dissemination, short videos have the potential of viral dissemination due to their short and sophisticated features. Compared with traditional pictures and texts, short videos have large amount of information, strong performance and good intuition, and thus people may use fragmented time to browse and share.

Short videos may be variously generated. For example, it is capable of shooting a short video file directly as a short video. Alternatively, a long video may be clipped to make short videos from selected clips of the long video. Specifically, one clip may be clipped from the long video, and the clip may be used as a short video. In addition, two or more clips may also be clipped from the long video, and a short video may be obtained by splicing the clipped clips.

The following describes the video title generation method provided by implementations of the present disclosure by taking generating the title of a short video as an example. It should be emphasized that the video title generation method provided by implementations of the present disclosure is not limited to title generation of short videos, but may also be applied to title generation of long videos (or video files in the traditional sense).

The title of the short video is generally required to reflect the content of the short video, and has a certain decorative effect. In the related art, a short video is generally generated by manual viewing of an annotator, and a title is manually created. This method of title generation requires a lot of manpower and time costs, may not adapt to massive short video updates, and has a high requirement to the annotator. In addition, it is difficult to ensure stable quality of the title of the short video created manually. Another common method of title generation is to count several words occurred at a high frequency, combine those words to a sentence, and use the sentence as the title of a video file. The title of the video file obtained in this way may not better reflect the subject of the video file, and the grammar, decoration and the like of the title are not good. It can be seen that the related video title generation methods above are not effective and efficient.

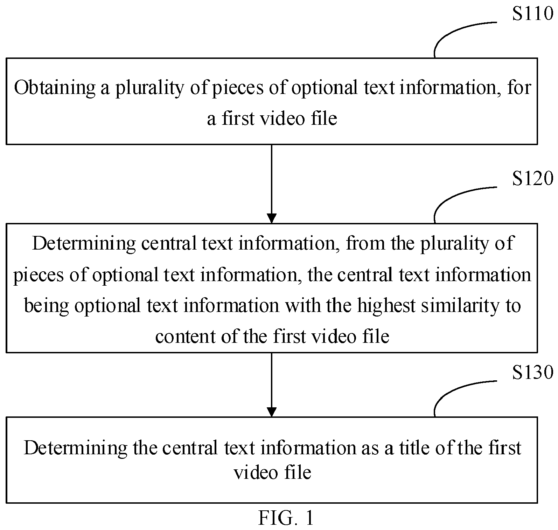

The embodiments of the present disclosure provide a video title generation method. FIG. 1 is a schematic flowchart of the video title generation method according to the embodiments of the present disclosure, and the video title generation method includes the followings.

In S 110, a plurality of pieces of optional text information are obtained, for a first video file.

In S120, central text information is determined, from the plurality of pieces of optional text information, the central text information being optional text information with the highest similarity to content of the first video file.

In S130, the central text information is determined as a title of the first video file.

In some implementations, the above optional text information includes at least one of: a bullet screen text of the first video file, a comment of the first video file, a subtitle of the first video file, or an introductory text of the first video file. By adopting a plurality of forms of files as the optional text information and selecting the central text information as the title of the first video file from the plurality of forms of files, it is capable of enriching the file source of the title, thereby obtaining the title that accurately represents the main content of the first video file.

In some implementations, the above first video file is a video file formed by using a clip selected from a second video file; and the bullet screen text of the first video file includes: a text of bullet comments posted by a plurality of users when the clip in the first video file is displayed during playing the second video file.

The above first video file may be referred to as the short video, and the above second video file may be referred to as the long video. The short video involved in implementations of the present disclosure may be any one among a video file with a shorter duration captured directly, a short video formed by a clip clipped from a video file, a short vide formed by combining two clips clipped from a video file, and a short video formed by combining at least two clips clipped from at least two video files.

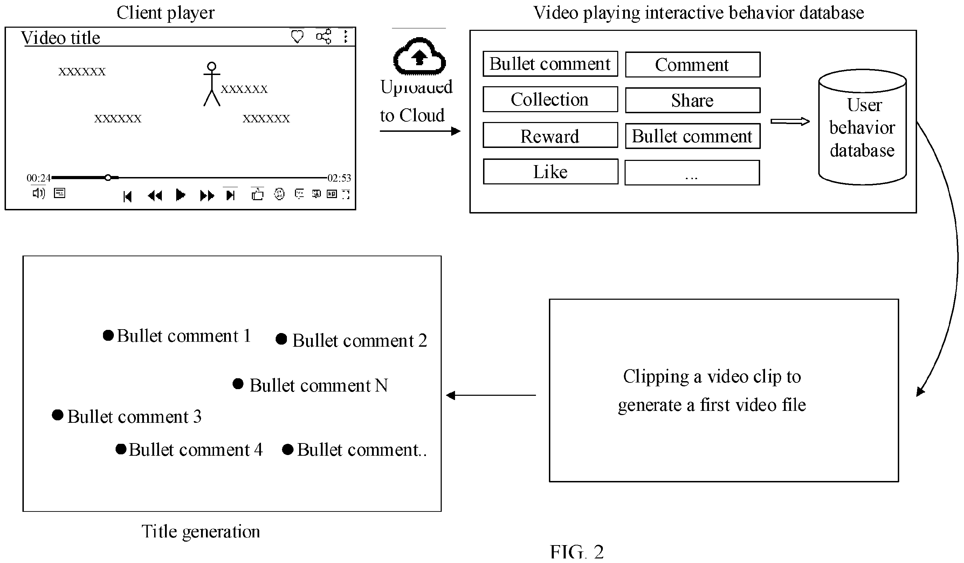

FIG. 2 is a flow block diagram of a video title generation solution according to the embodiments of the present disclosure. As shown in FIG. 2, a video title generation solution provided in the present disclosure mainly includes the following steps: collecting user interaction behavior data from a video player terminal (e.g., a client player) when a long video (i.e., a second video file) is played, the user behavior data including information such as posting a bullet comment, posting a comment, collecting, rewarding, sharing, and clicking a "like"; clipping the long video (i.e., the second video file) based on the user behavior data, and forming a short video (i.e., a first video file) by using a clipped clip; and determining a title of the short video by using a piece of optional text information of the short video (i.e., the first video file). Optionally, the above optional text information includes at least one of: a bullet screen text of the first video file, a comment of the first video file, a subtitle of the first video file, or an introductory text of the first video file. In an example, the bullet screen text may also be referred to as a bullet comment, and the bullet screen text may refer to the bullet comment containing text information.

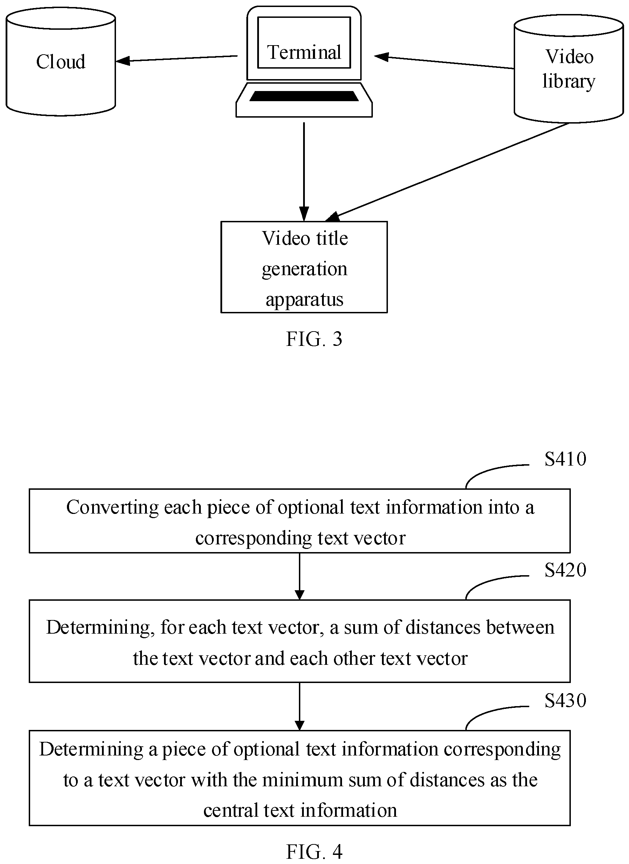

FIG. 3 is an application scene schematic diagram of a video title generation solution according to the embodiments of the present disclosure. As shown in FIG. 3, an apparatus for implementing video title generation provided in the present public implementation may be disposed in the network to obtain user behavior data from a Cloud terminal through wired or wireless communication network when a user watches the long video, and obtain the corresponding long video from a video library. After obtaining the long video, the apparatus for implementing video title generation may clip the long video into a short video according to the user behavior data, and determine the title of the short video by using information in the user behavior data, e.g., the bullet screen text.

In some implementations, the above obtaining of the interactive behavior data for the first video file includes: obtaining interactive behavior data for the second video file from a user behavior database. In an example, the user behavior database records the interactive behavior data of a plurality of video files from a video player terminal. The interactive behavior data of the plurality of video files includes at least one of: an identification of each video file, a total duration of the video file, an interactive behavior of the video file, or a time point of the interactive behavior in the video file.

For example, the above identification of the video file may include a video identifier (ID), which may be the unique label of the video file, and the Cloud terminal and the user behavior database thereof may uniquely determine a specific video file according to the video identifier.

The above total duration may include a total duration of the video file.

The above interactive behavior may include at least one of collecting, sharing, posting a bullet comment, posting a comment, rewarding and clicking a "like".

The above time point of the interactive behavior in the video file may include a time point in the playing duration of the video file when the interactive behavior of the user occurs.

For example, ID of a video file is 001, and the total duration is two hours. User A clicks to a collection button to collect when the video file has been played for fifteen minutes, and posts a bullet comment when the video file has been played for twenty minutes. The video player terminal may report the interactive behavior data of the user A for the video file to the Cloud terminal. The interactive behavior data may at least include the following information:

[Video file ID = 001;
total duration = two hours;
interactive behavior: collecting, corresponding time point thereof: 15th minute;
interactive behavior: posting a bullet comment, corresponding time point thereof: 20th minute] .

For this video file, user B clicks a sharing button to share when the video file has been played for eighteen minutes, and sends a comment when the video file has been played for twenty-five minutes. The video player terminal may report the interactive behavior data of the user B for the video file to the Cloud terminal. The interactive behavior data may at least include the following information:

[Video file ID = 001;
total duration = two hours;
interactive behavior: sharing, corresponding time point thereof: 18th minute;
interactive behavior: posting a comment, corresponding time point thereof: 25th minute].

The user behavior database in the Cloud terminal may count/analyze and save the interactive behavior data reported by each video player terminal. For example, for the above video file with ID of "001", the user behavior database counts the interactive behavior data reported by user A and user B through the video player terminal, and the interactive behavior data may include the following information:

[Video file ID = 001;
total duration = two hours;
interactive behavior: collecting, corresponding time point thereof: 15th minute;
interactive behavior: sharing, corresponding time point thereof: 18th minute;
interactive behavior: posting a bullet comment, corresponding time point thereof: 20th minute;
interactive behavior: posting a comment, corresponding time point thereof: 25th minute].

As the interactive behavior data reported by video player terminal gradually increase, the interactive behavior data for each video file counted in the user behavior database of the Cloud terminal may also be gradually enriched.

By using the interactive behavior data for the second video file counted and saved in the user behavior database, the interaction heat at each time point of the second video file may be determined, and the second video file (i.e. the long video) may be clipped according to the interaction heat to obtain the first video file (i.e. short video) with a high interaction heat. Then, the video title generation method provided in implementations of the present disclosure may be used to generate the title for the short video.

In some implementations, the above first video file is a video file formed by using a clip selected from the second video file, and the bullet screen text of the first video file includes: a text of bullet comments posted by a plurality of users when the clip in the first video file is displayed during playing the second video file.

For example, clip 1, clip 2, and clip 3 are selected from the long video, and then connected sequentially to obtain the short video. Upon generating the title of the short video, the title of the short video may be generated according to the bullet comments posted by the user at the time points of playing the clip 1, the clip 2 and the clip 3 during playing the short video, or the title of the short video may be generated by using the bullet comments posted by the user at the time points of playing the clip 1, the clip 2 and the clip 3, and other relevant information during playing the short video. Other relevant information may include: comments sent by the user at the time points of playing the clip 1, the clip 2 and the clip 3, subtitles in the short video, introductory text for the long video or the clip 1, the clip 2 and the clip 3, and the like.

It can be seen that the bullet screen text regarding the first video file in the second video file may be directly searched from the interactive behavior data sent by each user upon playing the second video file according to implementations of the present disclosure. This bullet screen obtaining method is more convenient, and may obtain a text of bullet comments posted by a large number of users for the first video file. Therefore, the title of the first video file may be determined through richer text materials, and the accuracy of the title may be improved.

As shown in FIG. 4, in some possible implementations, the above determining of the central text information from the plurality of pieces of optional text information includes the followings.

In S410, each piece of optional text information of the plurality of pieces of optional text information is converted into a corresponding text vector.

In S420, for each text vector, a sum of distances between the text vector and each other text vector is determined.

In S430, a piece of optional text information corresponding to a text vector with the minimum sum of distances is determined as the central text information.

Optionally, a manner in which a distance between the text vector and the other text vector is determined includes: calculating angle cosine between the text vector and the other text vector, to take the angle cosine as the distance between the text vector and the other text vector; or calculating a Euclidean distance between the text vector and the other text vector, to take the Euclidean distance as the distance between the text vector and the other text vector.

For example, taking the bullet screen text as the optional text information, in some possible implementations, the above determining of the central text information from the plurality of pieces of optional text information, and the using of the central text information as the title of the first video file specifically include the following steps.

In a first step, the bullet screen text of the first video file is extracted, and is recorded as: txt=[txt(1), txt(2),..., txt(i),..., txt(n)].

For example, n bullet screen texts are extracted, which are txt(1), txt(2),..., txt(n).

In a second step, each bullet screen text is converted into a corresponding text vector. After conversion, n corresponding text vectors are obtained, and are recorded as: vec=[vec(1), vec(2),..., vec(i),..., vec(n)].

For example, n corresponding text vectors may be obtained after conversion, which are vec(1),vec(2),..., vec(n).

The conversion method of text vector may be implemented by a neural network model such as a BERT (Bidirectional Encoder Representations from Transformers) model, an ERNIE (Enhanced Language Representation with Informative Entities) model, etc.

The BERT model as a whole is an autoencoder language model (Autoencoder LM), in which two tasks are designed to pre-train the model. The first task is to train the language model. Upon inputting a sentence, some words to be predicted are randomly selected, and then a special symbol [MASK] is used to replace the words to be predicted. The BERT model predicts the words to be replaced by MASK according to a given tag. The second task is to add a sentence-level continuity prediction task based on a bidirectional language model, that is, to predict whether two texts input to BERT are continuous texts. The introduction of the second task may make the trained BERT model better predict a relationship between consecutive text clips.

Comparatively, the BERT model may execute concurrently while extracting relational features of words in a sentence, and may extract the relational features at a plurality of different levels, thereby more comprehensively reflecting sentence semantics. Moreover, the BERT model may obtain the meanings of a word according to the context of the sentence, thereby avoiding ambiguity.

The ERNIE model uses informative entity in a knowledge graph as external knowledge to improve language representation. In order to add knowledge information into a model, the ERNIE model solves the following two problems. First, structured knowledge encoding: for abstract knowledge information, it is required to be encoded so that knowledge may be used for language representation. Second, heterogeneous information fusion: obviously, the encoding of words is different from that of knowledge when BERT pre-trains. Although the words and knowledge both are converted into vectors, the vectors are in different vector spaces. Therefore, it is required to design the model to implement the fusion of vocabulary, syntax and knowledge information. The ERNIE model is divided into two parts: extracting knowledge information and training the language model. In order to obtain a structured knowledge encoding, the ERNIE model adopts a knowledge embedding algorithm, and then integrates the encoded knowledge information into the semantic information. In order to better fuse semantic information and knowledge information, the architecture of BERT model is improved and a new pre-training task is designed, so that the fusion of knowledge information and semantic information may be implemented.

Implementations of the present disclosure adopt the BERT model or the ERNIE model to determine that a piece of optional text information is converted into a corresponding text vector, and may obtain the accurate text vector information of the piece of optional text information, so as to provide a basis for correctly determining the central text vector.

The training method of the BERT model or the ERNIE model will not be repeated in implementations of the present disclosure. By using a pre-trained BERT model or ERNIE model, it is capable of converting the optional text information into the corresponding text vector.

In a third step, for each text vector, a sum of distances between the text vector and each other text vector is determined.

For example, for each text vector vec(i) in the above example, the distances from vec(i) to other text vectors are calculated and the calculated distances are summed, recorded as sum(i), in which

$$sum_{(i)} = \sum_{j=1}^{M} \cos ine(vec(i), vec(j))$$

Here, $\cos ine(vec(i), vec(j))$ represents the distance between the text vector vec(i) and the text vector vec(j); the text vector vec(j) represents another text vector other than the text vector vec(i); and M represents the number of text vectors other than the text vector vec(i).

In an example, the calculation method of the distance between the text vector vec(i) and the text vector vec(j) may adopt a cosine formula:

$$cos(\theta) = \frac{\sum_{i=1}^{n}(X_i \times Y_i)}{\sqrt{\sum_{i=1}^{n}(X_i)^2} \times \sqrt{\sum_{i=1}^{n}(Y_i)^2}}$$

In the above cosine formula, $X_i$ and $Y_i$ represent an i-th element in the two text vectors (text vector $X$ and text vector $Y$), respectively; n represents the number of elements in text vector $X$ or text vector $Y$; and cos($\theta$) represents angle cosine between the text vector $X$ and the text vector $Y$, and the angle cosine may represent the distance between the text vector $X$ and the text vector $Y$.

The calculation method of the distance is not limited to the above method, and a method such as a Euclidean distance calculation method may also be used, which will not be described in detail in this disclosure. According to implementations of the present disclosure, the distance between text vectors may be determined in various ways, and the degree of difference of the text vectors may be quantified, thereby providing a basis for determining the bullet comment content that may represent the central text vector of the video content.

After calculation, the sum of the distances between each text vector and other text vectors may be recorded as: sum=[sum(1), sum(2),..., sum(i),..., sum(n)].

In a fourth step, based on the list of the sum of the distance between each text vector and other text vectors determined in the above steps, the bullet screen text corresponding to the text vector with the minimum sum of the distance is determined, and the determined bullet screen text is used as the title of the short video.

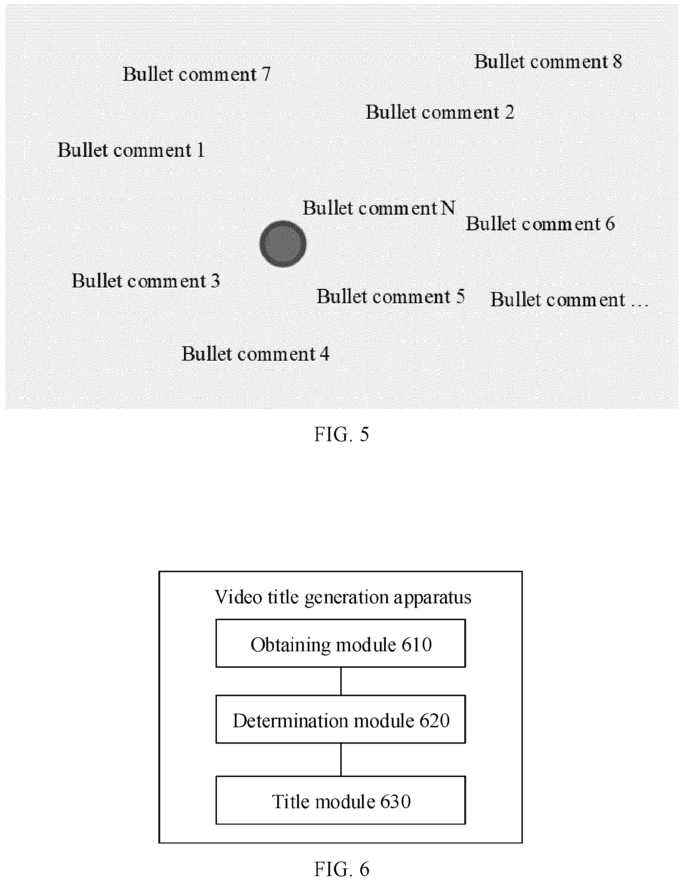

The above process may be considered as determining a central vector of the bullet comment. FIG. 5 is a schematic diagram of determining the central vector in text vectors corresponding to the bullet comments in a video title generation method according to the embodiments of the present disclosure. FIG. 5 shows the text vectors corresponding to a plurality of bullet comments. By using the above method, the bullet screen central vector (e.g., the bullet comment N in FIG. 5) is determined, that is, the central vector being the text vector with the minimum sum of distances from other text vectors. The bullet screen text corresponding to this text vector is used as the title of the short video. The bullet screen text may represent comment information with the highest acceptance level published by the user group in the system for this short video, and thus it may well represent the content of the short video or the views of users on the short video. Therefore, this bullet screen text has the highest similarity to the content of the short video, and is very suitable for being the title of the short video.

Implementations of the present disclosure also provide other methods of generating titles. For example, word segmentation processing is performed on each piece of optional text information of the plurality of pieces of optional text information, to obtain a plurality of segmented words, and an occurrence number that each segmented word appears in the plurality of pieces of optional text information is counted; L segmented words with the most occurrence number are selected from the plurality of segmented words as an important segmented word, and a word segmentation score is set for the important segmented word according to an occurrence number of the important segmented word, where L is a positive integer; for each piece of optional text information of the plurality of pieces of optional text information, the important segmented word contained in the piece of optional text information is determined, and a text score of the piece of optional text information is determined according to the word segmentation score of the important segmented word; and a piece of optional text information with the highest text score is determined as the central text information. The central text information may be taken as the title of the first video file.

Implementations of the present disclosure may adopt a word segmentation algorithm or a machine learning algorithm to implement the word segmentation processing of the optional text information. For example, the word segmentation processing is performed using a dictionary-based word segmentation algorithm or a counting-based machine learning algorithm. In an example, the dictionary-based word segmentation algorithm is also called a string matching word segmentation algorithm. This algorithm matches a string to be matched with a word in an established "sufficiently large" dictionary according to a certain strategy. If a corresponding entry is found, the matching is successful and the word is identified. Common dictionary-based word segmentation algorithms include a forward maximum matching method, a reverse maximum matching method, a bidirectional matching word segmentation method, and the like. The dictionary-based word segmentation algorithm is the most widely used and fastest word segmentation algorithm. For a long time, researchers have been optimizing the string-based matching method, such as maximum length setting, string storage and search method, and an organizational structure of the vocabulary, such as the usage of TRIE index trees, hash indexes, etc. Counting-based machine learning algorithms mainly include a Hidden Markov Model (HMM), a Conditional Random Field (CRF) algorithm, a Support Vector Machine (SVM) algorithm, a deep learning algorithm, and the like. Taking CRF as an example, the basic idea is to tag and train Chinese characters, which not only considers the occurrence number of words, but also considers the context. CRF has a better learning ability, and thus it has a good effect on the identification of ambiguous words and unregistered words. Common tokenizers use a combination of the machine learning algorithm and a dictionary, which may improve the accuracy of word segmentation, and improve adaptability to different fields. With development of deep learning, neural network-based tokenizers have also been developed, such as a bidirectional LSTM+CRF implementation tokenizer, which is essentially sequence annotations, and thus it is versatile and may be used for named entity identification.

After the above word segmentation processing, the implementations of the present disclosure may remove the segmented words that do not carry the actual meaning, such as modal particles, termination words, and the like, and determine a segmented word with the most occurrence number from the remaining segmented words as an important segmented word. Termination words may also be called stop words, out-of-use words, etc. Modal particles and termination words usually do not carry useful information. For example, meaningless words such as "le", "ah" and "me" may be regarded as modal particles or termination words. The deletion of the terminator in a sentence does not affect comprehension.

Taking the above optional text information being the bullet screen text as an example, for example, after word segmentation and counting, p segmented words with the most occurrence number are determined as the important segmented words, including W1, W2,..., and WP. For example, the occurrence number of WI is 100, the occurrence number of W2 is 80, ..., and the occurrence number of Wp is 20. The word segmentation score is determined for each important segmented word according to the occurrence number. For example, the word segmentation scores of W1, W2,..., and Wp are determined to be 100, 80,..., and 20, respectively. Then, for each bullet screen text, the important segmented words contained in each bullet screen text may be determined, and the word scores of the important segmented words are used as the text score of the bullet screen text. For example, the word segmentation scores of the important segmented word contained in the bullet screen text may be added to obtain the text score of the entire bullet screen text. The foregoing method of determining the text score according to the word segmentation scores is only an example, and implementations of the present disclosure do not limit thereto. For example, the important segmented words may be divided into different levels according to the word segmentation scores, and weights of the important segmented words of different levels may be set. Upon calculating the text score, the weights of the important segmented words contained in the text vector are added to obtain the text score of the text vector.

It can be seen that the bullet screen text with the highest text score contains the most important comments issued by the user group in the system for the short video, and thus it may reflect the content of the short video or the user's views on the short video. Therefore, it has the highest similarity to the content of the short video, and is very suitable for being the title of the short video.

It can be seen that the above video title generation method provided in implementations of the present disclosure selects a piece of optional text information that may best represent its content from a plurality of pieces of optional text information of the first video file, and takes the selected optional text information as the title of the first video file. Due to the selection of the existing optional text information, it is avoided to clip and piece together a plurality of pieces of text information to generate the title, and thus the problem of poor grammar and rhetoric of generating the title is avoided.

The present disclosure also provides a video title generation apparatus. FIG. 6 is a schematic structural diagram of a video title generation apparatus according to the embodiments of the present disclosure. As shown in FIG. 6 , the apparatus includes: an obtaining module 610 configured to obtain a plurality of pieces of optional text information, for a first video file; a determination module 620 configured to determine central text information, from the plurality of pieces of optional text information, the central text information being optional text information with the highest similarity to the content of the first video file; and a title module 630 configured to determine the central text information as a title of the first video file.

The embodiments of the present disclosure provide another apparatus for generating a video title, and the apparatus includes one or more features of the above embodiments of the video title generation apparatus. In one possible implementation, the optional text information includes at least one of: a bullet screen text of the first video file, a comment of the first video file, a subtitle of the first video file, or an introductory text of the first video file.

The first video file is a video file formed by using a clip selected from the second video file; and the bullet screen text of the first video file includes: a text of bullet comments posted by a plurality of users when the clip in the first video file is displayed during playing the second video file.

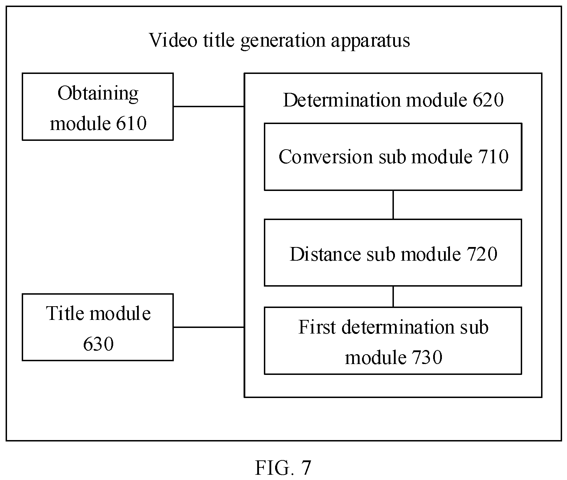

FIG. 7 is a video title generation apparatus provided by the embodiments of the present disclosure, and the apparatus includes one or more features of the above embodiments of the video title generation apparatus. In one possible implementation, the determining module 620 includes: a conversion sub module 710 configured to convert each piece of optional text information of the plurality of pieces of optional text information into a corresponding text vector; a distance sub module 720 configured to determine, for the text vector, a sum of distances between the text vector and each other text vector; and a first determination sub module 730 configured to determine a piece of optional text information corresponding to a text vector with the minimum sum of distances as the central text information.

The embodiments of the present disclosure provide another video title generation apparatus, and the apparatus includes one or more features of the above embodiments of the video title generation apparatus. In one possible implementation, a manner in which a distance between the text vector and the other text vector is determined includes: calculating an angle cosine between the text vector and the other text vector, to take the angle cosine as the distance between the text vector and the other text vector; or calculating a Euclidean distance between the text vector and the other text vector, to take the Euclidean distance as the distance between the text vector and the other text vector.

The embodiments of the present disclosure provide another video title generation apparatus, and the apparatus includes one or more features of the above embodiments of the video title generation apparatus. In one possible implementation, the conversion sub module is further configured to: convert the piece of optional text information into the corresponding text vector, by using at least one of a bidirectional encoder representation from transformers (BERT) model and an enhanced language representation with informative entities (ERNIE) model.

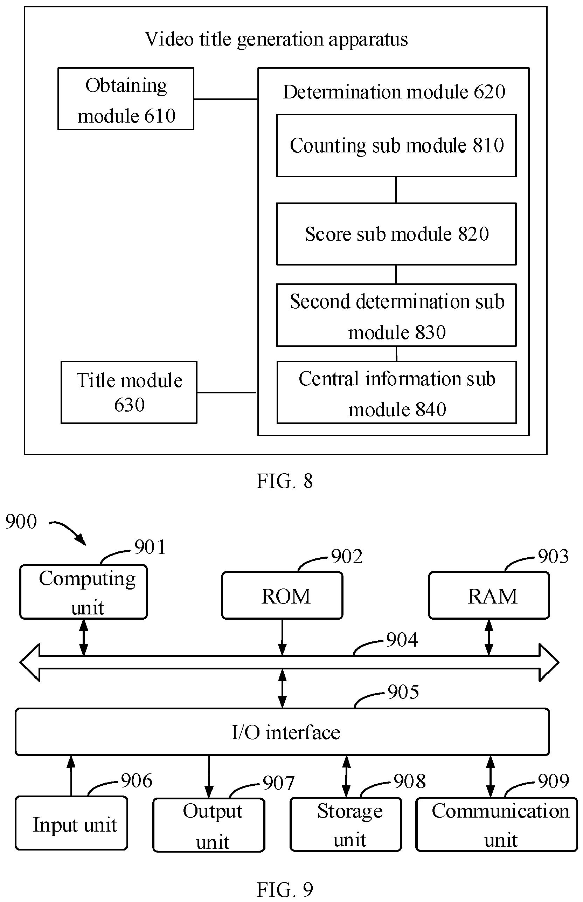

FIG. 8 is a video title generation apparatus provided by the embodiments of the present disclosure, and the apparatus includes one or more features of the above embodiments of the video title generation apparatus. In one possible implementation, the determination module 620 includes: a counting sub module 810 configured to perform word segmentation processing on each piece of optional text information of pieces of the plurality of pieces of optional text information, to obtain a plurality of segmented words, and count an occurrence number that each segmented word appears in the plurality of pieces of optional text information; a score sub module 820 configured to select L segmented words with the most occurrence number from the plurality of segmented words as an important segmented word, and set a word segmentation score for the important segmented word according to an occurrence number of the important segmented word L, in which L is a positive integer; a second determination sub module 830 configured to, for each piece of optional text information of the plurality of pieces of optional text information, determine the important segmented word contained in the piece of optional text information, and determine a text score of the piece of optional text information according to the word segmentation score of the important segmented word, and a central information sub module 840 configured to determine a piece of optional text information with the highest text score as the central text information.

In the technical solutions of the present disclosure, collection, storage and application of user's personal information involved herein are all in compliance with the provisions of relevant laws and regulations, and do not violate public order and good customs.

According to the embodiments of the present disclosure, the present disclosure also provides an electronic device, a readable storage medium and a computer program product.

FIG. 9 illustrates a schematic block diagram of an example electronic device 900 that may be used to implement the embodiments of the present disclosure. Electronic devices are intended to represent various forms of digital computers, such as, laptops, desktops, workstations, personal digital assistants, servers, blade servers, mainframe computers, and other suitable computers. Electronic devices may also represent various forms of mobile devices, such as, personal digital processing, cellular phones, smart phones, wearable devices and other similar computing devices. Components shown herein, their connections and relationships as well as their functions are merely examples, and are not intended to limit implementations of the present disclosure described and/or required herein.

As shown in FIG. 9, the electronic device 900 includes a computing unit 901 that may perform various appropriate actions and processes according to a computer program stored in a read only memory (ROM) 902 or a computer program loaded from a storage unit 908 into a random access memory (RAM) 903. In RAM 903, various programs and data required for the operation of the electronic device 900 may also be stored. The computing unit 901, ROM 902 and RAM 903 are connected each other through bus 504. The input/output (I/O) interface 905 is also connected to the bus 904.

A plurality of components in the electronic device 900 are connected to the I/O interface 905, and include an input unit 906 such as a keyboard, a mouse, and the like, an output unit 907 such as various types of displays, speakers, and the like, a storage unit 908 such as a magnetic disk, an optical disk, and the like, and a communication unit 909 such as a network card, a modem, a wireless communication transceiver, and the like. The communication unit 909 allows the electronic device 900 to exchange information/data with other devices through computer networks such as Internet and/or various telecommunication networks.

The computing unit 901 may be various general-purpose and/or special-purpose processing components with processing and computing capabilities. Some examples of the computing unit 901 include, but are not limited to, a central processing unit (CPU), a graphics processing unit (GPU), various dedicated artificial intelligence (AI) computing chips, various computing units running machine learning model algorithms, digital signal processors (DSPS), and any appropriate processors, controllers, microcontrollers, and the like. The calculation unit 901 performs various methods and processes described above, such as a video title generation method. For example, in some implementations, the video title generation method may be implemented as a computer software program that is tangibly contained in a machine-readable medium, such as the storage unit 908. In some implementations, part or all of the computer program may be loaded and/or installed on the electronic device 900 via ROM 902 and/or the communication unit 909. When the computer program is loaded into RAM 903 and executed by the computing unit 901, one or more steps of the video title generation method described above may be performed. Alternatively, in other implementations, the computing unit 901 may be configured to perform the video title generation method by any other suitable means (e.g., by means of firmware).

Various implementations of the systems and technologies described above herein may be implemented in a digital electronic circuit system, an integrated circuit system, a field programmable gate array (FPGA), an application specific integrated circuit (ASIC), an application special standard product (ASSP), a system on chip (SOC), a load programmable logic device (CPLD), a computer hardware, firmware, software, and/or a combination thereof. These various implementations may include implementing in one or more computer programs that may be executed and/or interpreted on a programmable system including at least one programmable processor. The programmable processor may be a special-purpose or general-purpose programmable processor, may receive data and instructions from a storage system, at least one input device, and at least one output device, and may transmit data and instructions to the storage system, the at least one input device, and the at least one output device.

The program code for implementing the methods of the present disclosure may be written in any combination of one or more programming languages. These program codes may be provided to the processor or controller of general-purpose computer, special-purpose computer or other programmable data processing device, so that when executed by the processor or controller, the program code enables the functions/operations specified in the flow chart and/or block diagram to be implemented. The program code may be executed completely on a machine, partially on a machine, partially on a machine and partially on a remote machine, or completely on a remote machine or server as a separate software package.

In the context of the present disclosure, a machine-readable medium may be a tangible medium that may contain or store programs for use by or in combination with an instruction execution system, device, or equipment. The machine-readable medium may be machine-readable signal medium or machine-readable storage medium. The machine readable medium may include, but are not limited to, electronic, magnetic, optical, electromagnetic, infrared, or semiconductor systems, devices, or equipment, or any suitable combination of the above. More specific examples of the machine-readable storage medium may include electrical connections based on one or more lines, portable computer disk, hard disk, random access memory (RAM), read only memory (ROM), erasable programmable read only memory (EPROM or flash memory), optical fiber, compact disk read only memory (CD-ROM), optical storage device, magnetic storage device, or any suitable combination of the above.

In order to provide interaction with the user, the systems and technologies described herein may be implemented on a computer. The computer has a display device (e.g., a cathode ray tube (CRT) or a liquid crystal display (LCD) monitor) for displaying information to the user and a keyboard and a pointing device (e.g., a mouse or a trackball) through which the user may provide input to the computer. Other types of devices may also be used to provide interaction with the user. For example, feedback provided to the user may be any form of sensory feedback (e.g., visual feedback, auditory feedback, or tactile feedback), and it is capable of receiving input from the user in any form (including acoustic input, voice input, or tactile input).

The systems and technologies described herein may be implemented in a computing system that includes a back-end component (e.g., as a data server), a computing system that includes a middleware component (e.g., as an application server), a computing system that includes a front-end component (e.g., as a user computer with a graphical user interface or web browser through which the user may interact with implementations of the systems and technologies described herein), or a computing system that includes any combination of the back-end component, the middleware component, or the front-end component. The components of the system may be connected each other through any form or kind of digital data communication (e.g., a communication network). Examples of the communication network include a local area network (LAN), a wide area network (WAN), and Internet.

A computer system may include a client and a server. The client and the server are generally far away from each other and usually interact through a communication network. The server may also be a server of a distributed system or a server combined with a blockchain, and the relationship between the client and the server is generated through computer programs performed on a corresponding computer and having a client-server relationship with each other.

It should be understood that various forms of processes shown above may be used to reorder, add or delete steps. For example, steps described in the present disclosure may be executed in parallel, sequentially, or in a different order, as long as the desired result of the technical solution disclosed in the present disclosure may be achieved, but is not limited herein.

The foregoing specific implementations do not constitute a limitation to the protection scope of the present disclosure. Those of ordinary skill in the art should understand that various modifications, combinations, sub-combinations and substitutions may be made according to design requirements and other factors. Any modification, equivalent replacement and improvement made within the principle of the present disclosure should be included in the protection scope of the present disclosure.

**Claims**

1. A video title generation method, **characterized by** comprising:

   obtaining (S110) a plurality of pieces of optional text information, for a first video file;
   determining (S120) central text information, from the plurality of pieces of optional text information, the central text information being optional text information with a highest similarity to content of the first video file; and
   determining (S130) the central text information as a title of the first video file.

2. The method of claim 1, wherein the optional text information comprises at least one of: a bullet screen text of the first video file, a comment of the first video file, a subtitle of the first video file, or an introductory text of the first video file;
   preferably, the first video file is a video file formed by using a clip selected from a second video file; and
   the bullet screen text of the first video file comprises: a text of bullet comments posted by a plurality of users when the clip in the first video file is displayed during playing the second video file.

3. The method of any one of claims 1 to 2, wherein determining (S120) the central text information from the plurality of pieces of optional text information comprises:

   converting (S410) each piece of optional text information of the plurality of pieces of optional text information into a corresponding text vector;
   determining (S420), for the text vector, a sum of distances between the text vector and each other text vector; and
   determining (S430) a piece of optional text information corresponding to a text vector with a minimum sum of distances as the central text information.

4. The method of claim 3, wherein a manner in which a distance between the text vector and the other text vector is determined comprises:

   calculating an angle cosine between the text vector and the other text vector, to take the angle cosine as the distance between the text vector and the other text vector; or
   calculating a Euclidean distance between the text vector and the other text vector, to take the Euclidean distance as the distance between the text vector and the other text vector.

5. The method of claim 3 or 4, wherein converting (S410) the piece of optional text information into the corresponding text vector comprises:
   converting the piece of optional text information into the corresponding text vector, by using at least one of a bidirectional encoder representation from transformers, BERT, model and an enhanced language representation with informative entities, ERNIE, model.

6. The method of any one of claims 1 to 2, wherein determining (S120) the central text information from the plurality of pieces of optional text information, comprises:

   performing word segmentation processing on each piece of optional text information of the plurality of pieces of optional text information, to obtain a plurality of segmented words, and counting an occurrence number that each segmented word appears in the plurality of pieces of optional text information;

selecting L segmented words with a most occurrence number from the plurality of segmented words as an important segmented word, and setting a word segmentation score for the important segmented word according to an occurrence number of the important segmented word, wherein L is a positive integer;

for each piece of optional text information of the plurality of pieces of optional text information, determining the important segmented word contained in the piece of optional text information, and determining a text score of the piece of optional text information according to the word segmentation score of the important segmented word; and

determining a piece of optional text information with a highest text score as the central text information.

7. A video title generation apparatus, **characterized by** comprising:

an obtaining module (610) configured to obtain a plurality of pieces of optional text information, for a first video file;

a determination module (620) configured to determine central text information, from the plurality of pieces of optional text information, the central text information being optional text information with a highest similarity to content of the first video file; and

a title module (630) configured to determine the central text information as a title of the first video file.

8. The apparatus of claim 7, wherein the optional text information comprises at least one of: a bullet screen text of the first video file, a comment of the first video file, a subtitle of the first video file, or an introductory text of the first video file;

preferably, the first video file is a video file formed by using a clip selected from a second video file; and the bullet screen text of the first video file comprises: a text of bullet comments posted by a plurality of users when the clip in the first video file is displayed during playing the second video file.

9. The apparatus of any one of claims 7 to 8, wherein the determination module (620) comprises:

a conversion sub module (710) configured to convert each piece of optional text information of the plurality of pieces of optional text information into a corresponding text vector;

a distance sub module (720) configured to determine, for the text vector, a sum of distances between the text vector and each other text vector; and

a first determination sub module (730) configured to determine a piece of optional text information corresponding to a text vector with a minimum sum of distances as the central text information.

10. The apparatus of claim 9, wherein a manner in which a distance between the text vector and the other text vector is determined comprises:

calculating an angle cosine between the text vector and the other text vector, to take the angle cosine as the distance between the text vector and the other text vector; or

calculating a Euclidean distance between the text vector and the other text vector, to take the Euclidean distance as the distance between the text vector and the other text vector.

11. The apparatus of claim 9 or 10, wherein the conversion sub module (710) is further configured to: convert the piece of optional text information into the corresponding text vector, by using at least one of a bidirectional encoder representation from transformers, BERT, model and an enhanced language representation with informative entities, ERNIE, model.

12. The apparatus of any one of claims 7 to 8, wherein the determination module (620) comprises:

a counting sub module (810) configured to perform word segmentation processing on each piece of optional text information of the plurality of pieces of optional text information, to obtain a plurality of segmented words, and count an occurrence number that each segmented word appears in the plurality of pieces of optional text information;

a score sub module (820) configured to select L segmented words with a most occurrence number from the plurality of segmented words as an important segmented word, and set a word segmentation score for the important segmented word according to an occurrence number of the important segmented word, wherein L is a positive integer;

a second determination sub module (830) configured to, for each piece of optional text information of the plurality of pieces of optional text information, determine the important segmented word contained in the piece of optional text information, and determine a text score of the piece of optional text information according to the word segmentation score of the important segmented word; and

a central information sub module (840) configured to determine a piece of optional text information with a highest text score as the central text information.

13. An electronic device (900), comprising:

at least one processor; and
a memory connected in communication with the at least one processor;
wherein the memory stores an instruction executable by the at least one processor, and the instruction, when executed by the at least one processor, enables the at least one processor to execute the method of any one of claims 1 to 6.

14. A non-transitory computer-readable storage medium storing a computer instruction thereon, wherein the computer instruction is used to enable a computer to execute the method of any one of claims 1 to 6.

15. A computer program product comprising a computer program, wherein the computer program implements the method of any one of claims 1 to 6, when executed by a processor.

S110

Obtaining a plurality of pieces of optional text information, for a first video file

S120

Determining central text information, from the plurality of pieces of optional text information, the central text information being optional text information with the highest similarity to content of the first video file

S130

Determining the central text information as a title of the first video file

FIG. 1

Client player

Video title      ♡ ⤴ ⋮

xxxxxx

xxxxxx

xxxxxx      xxxxxx

00:24 ━━━○━━━━━━ 02:53

◁)) ▣    |◀ ◀◀ ▶ ▶▶ ▶| ⬚ ☺ ⬚ ⬚ ⬚ ⬚

Video playing interactive behavior database

☁⬆

Upioaueu
to Cloud

| Bullet comment | Comment |
| Collection | Share |
| Reward | Bullet comment |
| Like | ... |

⇒ User
behavior
database

● Bullet comment 1    ● Bullet comment 2

● Bullet comment N

● Bullet comment 3

● Bullet comment 4    ● Bullet comment..

Title generation

Clipping a video clip to
generate a first video file

FIG. 2

EP 4 209 929 A1

Cloud ← Terminal ← Video library

Terminal → Video title generation apparatus

Video library → Video title generation apparatus

FIG. 3

S410

Converting each piece of optional text information into a corresponding text vector

S420

Determining, for each text vector, a sum of distances between the text vector and each other text vector

S430

Determining a piece of optional text information corresponding to a text vector with the minimum sum of distances as the central text information

FIG. 4

Bullet comment 7

Bullet comment 8

Bullet comment 2

Bullet comment 1

Bullet comment N

Bullet comment 6

Bullet comment 3

Bullet comment 5    Bullet comment …

Bullet comment 4

FIG. 5

Video title generation apparatus

Obtaining module 610

Determination module 620

Title module 630

FIG. 6

Video title generation apparatus

Obtaining module 610

Determination module 620

Conversion sub module 710

Distance sub module 720

First determination sub module 730

Title module 630

FIG. 7

Video title generation apparatus

Obtaining module 610

Determination module 620

Counting sub module 810

Score sub module 820

Second determination sub module 830

Title module 630

Central information sub module 840

FIG. 8

900

Computing unit 901

ROM 902

RAM 903

904

905

I/O interface

Input unit 906

Output unit 907

Storage unit 908

Communication unit 909

FIG. 9

Europäisches
Patentamt

European
Patent Office

Office européen
des brevets

# EUROPEAN SEARCH REPORT

Application Number

EP 22 20 8819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 829 881 A (SHENZHEN TENCENT NETWORK INFORMATION TECH CO LTD) 16 November 2018 (2018-11-16) * claim 1 * ----- | 1-15 | INV. G06F16/78 G06F16/71 |

TECHNICAL FIELDS
SEARCHED (IPC)

G06F

The present search report has been drawn up for all claims

| Place of search | Date of completion of the search | Examiner |
|---|---|---|
| The Hague | 1 May 2023 | Hackelbusch, Richard |

EPO FORM 1503 03.82 (P04C01)

## ANNEX TO THE EUROPEAN SEARCH REPORT
## ON EUROPEAN PATENT APPLICATION NO.

EP 22 20 8819

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2023

| Patent document cited in search report | | Publication date | Patent family member(s) | Publication date |
|---|---|---|---|---|
| CN 108829881 | A | 16-11-2018 | NONE | |

For more details about this annex : see Official Journal of the European Patent Office, No. 12/82